Europäisches Patentamt

European Patent Office

Office européen des brevets

(19)

(11) **EP 1 571 777 A1**

(12) **EUROPEAN PATENT APPLICATION**

(43) Date of publication:
**07.09.2005 Bulletin 2005/36**

(51) Int Cl.7: **H04L 9/32**

(21) Application number: **04290557.0**

(22) Date of filing: **02.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **FRANCE TELECOM
75015 Paris (FR)**

(72) Inventors:
• **Canard, Sébastien
14000 Caen (FR)**

• **Gaud, Matthieu
14470 Courseulles-sur-mer (FR)**
• **Traore, Jacques
61100 Saint Georges des Groseillers (FR)**

(74) Representative: **Joly, Jean-Jacques et al
Cabinet Beau de Loménie
158, rue de l'Université
75340 Paris Cédex 07 (FR)**

(54) **Electronic voting process using fair blind signatures**

(57)    In an electronic voting process, a voter ($V_i$) encrypts his vote (**$v_i$**) according to the encryption scheme ($E_{TM}$) of a tallier mix-net (50) used to tally up the votes cast. The voter ($V_i$) obtains on his encrypted vote, ($x_i$), from an admin server module (20), a digital signature according to a fair blind signature scheme (*FBSS*). The encrypted vote ($x_i$) is encrypted a second time, together with the unblinded digital signature ($y_i$) thereof by the admin server, using the encryption scheme ($E_M$) of a randomizing mix-net (40), to yield an output ($c_i$), and the voter uses his own signature scheme ($S_i$) to sign this, giving ($\sigma_i$). The voter sends an ID code and data including ($c_i, \sigma_i$) to a bulletin board server (30). Discrepancies in this vote data can be detected and their origin traced by prompting the randomizing mix-net servers (40) to provide proofs of correctness, and using the signature-tracing mechanism of FBSS.

FIG.1

Printed by Jouve, 75001 PARIS (FR)

**Description**

The present invention concerns the field of cryptography and, more especially, the present invention relates to electronic voting.

Unlike traditional voting, which involves voters casting their votes by physical attendance at a polling station, electronic or "on-line" voting enables voters to cast their respective votes remotely with the aid of a suitable machine (computer, mobile telephone, etc.) connected to a network such as the Internet.

It is to be understood that in the present document, unless the context requires otherwise, the expressions "on-line voting" and "electronic voting" will be used interchangeably.

In order for an on-line voting system to constitute an acceptable alternative to traditional voting schemes, it is generally considered necessary for the on-line system to respect the following principles:

- **Eligibility:** only votes of legitimate voters must be taken into account;
- **Unreusability:** each voter must only be able to cast one vote;
- **Anonymity**: the ballot must be secret, in other words, it should be impossible to tell how a particular voter has voted;
- **Accuracy**: once a ballot has been cast it should be impossible to alter it;
- **Fairness**: it should only be possible to tally up the results of the vote after all votes have been cast (in other words, it should be impossible to perform partial tabulation while voting is still in progress);
- **Vote and walk-away**: Once a voter has cast his vote there is no further action he need take;
- **Public verifiability:** the validity of the whole voting process can be readily verified by anyone.

Many studies have attempted to design secure and convenient electronic voting systems. Indeed, electronic voting is one of the major applications of cryptography. The known proposals for electronic voting schemes often make use of blind signatures.

A digital signature scheme is a cryptographic protocol involving a user and a signer. The user generates a message, generally for transmission over a network, such as the Internet. The signer applies a digital signature to the message as an indication of the validity or authenticity of the message. In conventional digital signature schemes the signer knows the content of the message to which the digital signature is being applied, an algorithm (e.g. the well-known RSA algorithm) is used to generate a digital signature which is difficult or impossible to forge, and the validity of the digital signature can be verified by any interested third party simply by applying the signer's public key.

In a blind signature scheme, the user can obtain a digital signature on his message without letting the signer have information on the content of the message. Clearly this is a desirable feature in a voting application where the message being signed corresponds to a vote. A well-known blind signature scheme developed by Prof. Dr. David Chaum is described in EP-A-0 139 313. Blind signature schemes are often proposed for use in digital cash applications so as to enable an individual to purchase digital cash from a financial institution in a manner which prevents the financial institution from being able to trace the subsequent use of that cash.

As indicated above, various electronic voting schemes have been proposed that make use of blind signatures. However, these earlier proposals suffer from a number of drawbacks. Some schemes do not satisfy the requirement for "vote and walk-away", instead each voter must participate in the vote counting procedure after all voters have cast their votes. In some schemes, if the "vote and walk-away" principle is respected then the "accuracy" principle is not.

The preferred embodiments of the present invention provide an efficient and secure electronic voting scheme based not on ordinary blind signatures but on fair blind signatures.

In an ordinary blind signature scheme, if the signer signs a number of documents for different users then, when he is presented with one particular document that he has signed, he will not be able to determine when or for whom he signed that document. By way of contrast, in a fair blind signature scheme (*FBSS*), there is an additional participant, one or more trusted authorities (or "judges"), and the signer can identify which signature resulted from a given signing session with the help of the trusted authority (or of a quorum of trusted authorities if there is more than one).

If the signer has a transcript of a particular signing session then he can identify the signature-message pair resulting from that session: this is termed "signature tracing". Conversely, if the signer has available a particular signature-message pair then he can determine the signing session at which this was generated: this is termed "session tracing". Although fair blind signature schemes enable a given digital signature to be linked to a given user, generally the user's message still remains private. Fair blind signature schemes have mainly been proposed in the context of the fight against organized crime, particularly, the prevention of money laundering.

The preferred embodiments of the present invention provide an electronic voting scheme which uses a fair blind signature process to overcome the drawbacks of the prior art, which respects the above-mentioned principles of anonymity, eligibility, unreusability, accuracy, fairness, vote and walk-away and public verifiability, which is efficient and secure.

The present invention provides an electronic voting method comprising the step of using a fair blind signature scheme to obtain a digital signature of a signal containing the voter's vote. Typically, the digital signature will be applied by a server module that can be designated an "admin server" module.

In the preferred embodiments of the present invention the fair blind signature scheme is a threshold fair blind signature scheme in which the blind signature is generated by the cooperation of t out of n admin servers and the voter associated with a particular ballot (but not the way in which he has voted), can be identified by the cooperation of r out of n trusted authorities.

Advantageously, each digital signature obtained from the set of admin servers is one-more unforgeable as long as $n - t + 1$ of the servers in said group are honest.

In general, the signal that is signed by the admin server module corresponds to the voter's vote encrypted according to a first encryption scheme (notably, that of a tallier module used to tally up the votes cast). So, in this case, the electronic voting method will further comprise the step of applying the decryption scheme inverse to said first encryption scheme to the data signal so as to retrieve the voter's vote. Preferably the tallier module is implemented as a mix-net.

According to the preferred embodiments of the present invention, the data signal comprising the voter's encrypted vote is itself encrypted, according to a second encryption scheme (notably, that of a randomizing module) and it is this encrypted data signal that is transmitted to an electronic ballot box as the voter casting his vote. Advantageously, a batch of the encrypted data signals is supplied to the randomizer module for decryption and reordering (so that the voter's identity cannot be determined by consideration of the position of his vote in the list of cast votes). Preferably, the randomizer module is a mix-net.

In the above-described electronic voting method according to the preferred embodiments of the present invention, the mix-net servers do not normally need to produce proofs of correctness of their operation (confirming that the outputs thereof truly do correspond to re-ordered ones of their inputs). Such proofs are only required in the case where a discrepancy is noticed in the voting process. For this reason, in the case of an honest vote (where no voter or mix-net server cheats), the counting of votes is extremely rapid.

Further features and advantages of the present invention will become apparent from the following description of a preferred embodiment thereof, given by way of example, as illustrated by the accompanying drawings, in which:

Fig.1 is a diagram indicating schematically the main participants in the electronic voting scheme of a preferred embodiment of the present invention;
Fig.2 is a diagram illustrating schematically the main steps in the vote-casting phase of the preferred embodiment of the electronic voting method according to the present invention;

Fig.3 is a flow diagram illustrating the main steps in the vote-counting phase of the preferred embodiment of the electronic voting method according to the present invention;
Fig.4 is a flow diagram indicating the main steps in a procedure for handling discrepancies noted during the counting phase, particularly in the case where the discrepancy is attributable to a server in a randomizing mix-net; and
Fig.5 is a flow diagram indicating the main steps in a further procedure for handling discrepancies noted during the counting phase, particularly in the case where the discrepancy is attributable to a voter.

The electronic voting method of the present invention involves participants of six basic types:

- voters,
- an admin server or "electoral authority" (preferably implemented using a set of admin servers),
- a randomizing entity (preferably implemented as a randomizing mix-net),
- a ballot-box server,
- talliers (which are preferably tally servers of a tallier mix-net), and
- a number, **n**, of trusted authorities (or "judges").

A given voter can be designated using the symbol $V_i$ and has an identifying code which can be designated $Id_i$. A given voter $V_i$ can apply a certificate, $C_i$, to data he transmits so as to indicate his entitlement to participate in a given voting process.

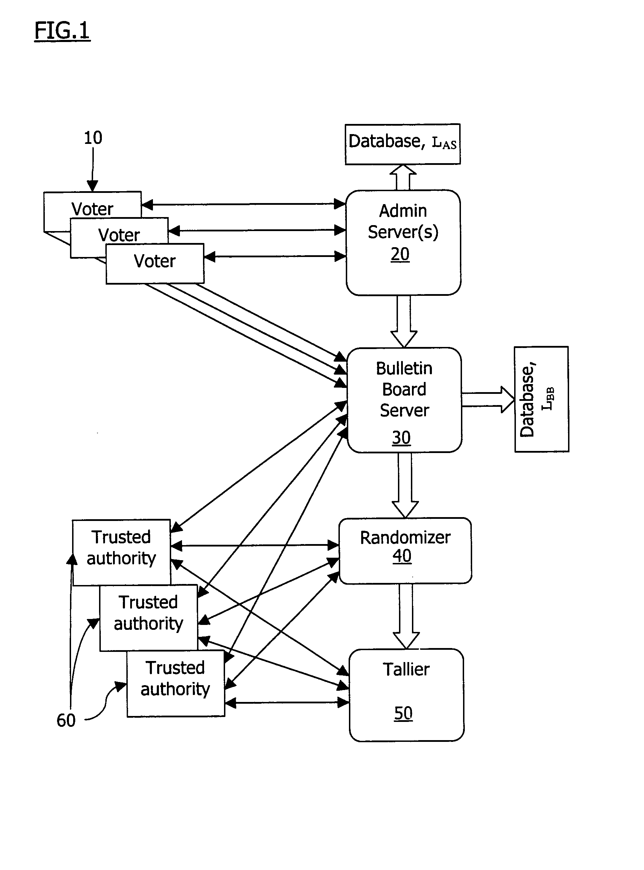

Fig.1 is a diagram illustrating schematically how the various participants interact in one preferred embodiment of the present invention.

As shown in Fig.1, according to the electronic voting scheme of the preferred embodiment of the present invention, voters, 10, make contact with an admin server module 20 in order to obtain digital signature of encrypted vote data, according to a fair blind signature scheme (FBSS). The digitally-signed vote data is provided to a bulletin board server 30 when the voter casts his vote. This vote data is doubly-encrypted: the outer layer of encryption is according to an encryption scheme of a randomizer module 40, the inner layer of encryption is according to an encryption scheme of a tallier module 50. The randomizer module 40 decrypts the vote, leaving it in (singly-)encrypted form, and randomizes the order of the votes received from different voters. The tallier module 50 decrypts the (singly-)encrypted, and re-ordered votes so as to retrieve the votes that have been cast, tallies up the votes and outputs the results of the vote.

The admin server module (20) maintains a database, $L_{AS}$, of data received from voters for whom it has provided digital signatures. The bulletin board server (30) maintains a database, $L_{BB}$, of data received from voters who have posted votes.

At various stages in the voting process discrepancies (or "irregularities") can be detected (for example, at the bulletin board server 30, the randomizer module 40 or the tallier module 50). If the irregularity is determined to be attributable to the voter, the set of trusted authorities, 60, appointed to help operate the fair blind signature scheme are contacted so as to be able to determine the (singly-) encrypted vote data and associated digital signature data affected by the irregularity. In the case where the randomizer module 40 is implemented as a mix-net, it is only necessary for the mix-net servers to generate proofs of correctness (notably, zero-knowledge proofs of correctness) in the case where an irregularity is detected in the voting process. If no irregularities are detected in the voting process then there is no need for the mix-net servers of the randomizer module 40 to generate proofs of correctness. This renders the electronic voting process according to the preferred embodiment of the present invention fast in producing the results of the vote.

The voting method according to the preferred embodiment of the present invention involves the following cryptographic primitives: a digital signature scheme (applied by the voter, 10), a threshold fair blind signature scheme (involving the voter, an admin server module 20 implemented using a set of admin servers and the set of trusted authorities 60), two mix-nets (one mix-net implementing the randomizing module 40, and one mix-net implementing the tallier module 50), and two encryption schemes (that of the randomizing mix-net 40 and that of the tallier mix-net 50).

In the description below of the electronic voting process according to a preferred embodiment of the invention, the cryptographic primitives that are used will be referred to in general terms, without giving full details of any particular implementation. This is because the present invention is not limited with regard to the particular way in which these various primitives are put into practice. Numerous digital signature schemes, threshold fair blind signature schemes, mix-nets and encryption schemes are well-known in the field of cryptography and any secure implementation of these is suitable for use in the present invention.

In a similar way, the present invention is applicable without limitation with regard to the particular hardware or software that is used to implement the various described functions. Suitable software routines and hardware will readily occur to the skilled man based on his common general knowledge in this field.

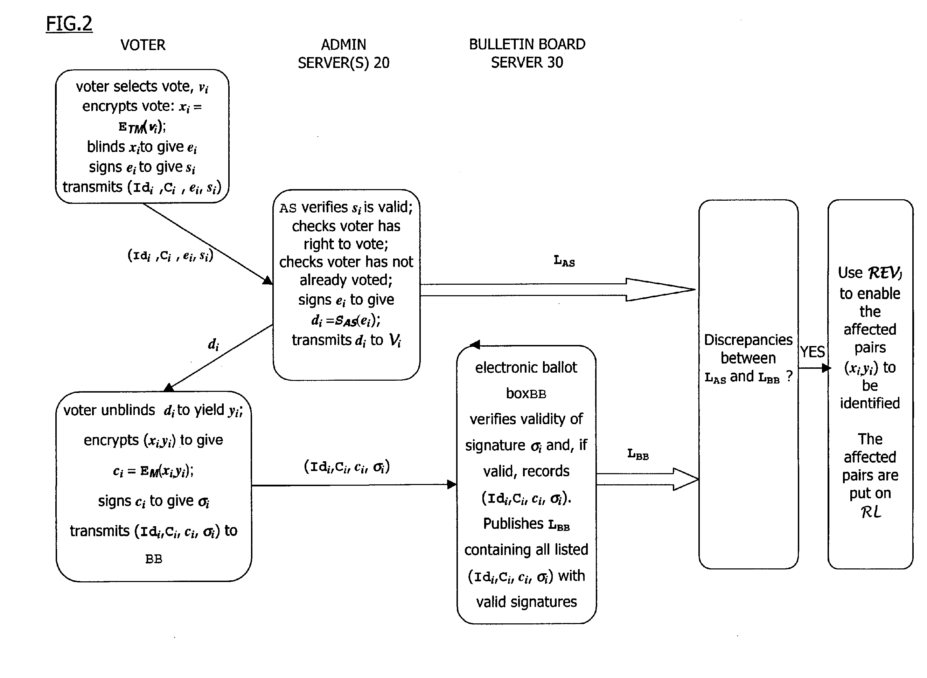

The voting method according to one preferred embodiment of the present invention will now be described with reference to Figs.2 to 5. This voting method has three main phases: a registration phase, a voting phase, and a vote-counting stage.

The registration phase involves the voter, $V_i$, interacting with an admin server, $AS$, or electoral authority, in order to activate his entitlement to vote. As a result of this interaction, the admin server adds this voter, $V_i$, to its electoral register of voters able to participate in future elections. The interaction between the voter and the admin server during the registration phase can take any convenient form. The voter may contact the admin server directly, for example, by electronic means, or indirectly, for example by using a telephone-based voice-activated response system or by mailing in a completed form to an electoral officer who then updates the electoral list held by the admin server. Advantageously, some security measures, of any convenient type, are adopted so as to ensure that only people who are truly entitled to vote can become recorded in the admin server's electoral register.

During the registration phase the voter obtains the certificate, $C_i$, that permits him to sign messages. This certificate can take any convenient form: for example, it could be an X509 certificate. The certificate, $C_i$, is used by the voter during the voting phase.

The voting phase of the preferred embodiment of electronic voting method according to the present invention will now be described with reference to the flow diagram of Fig.2.

A voter, $V_i$, selects the vote of his choice, $v_i$, and encrypts this vote using the encryption key of a tallier, namely an entity that will be involved in tallying the results of the voting process. Any convenient asymmetric algorithm (RSA, El Gamal, etc.) can be used as the encryption scheme of the tallier.

In the preferred embodiments of the invention the tallier is implemented as a mix-net, $TM$, consisting of a sequence of servers (or "mixes"). Each server of the mix-net receives a batch of input messages and produces as output the batch in a permuted order. The tallier mix-net can be of various types, for example, a Chaumian mix-net (that is, a mix-net in which the messages are successively encrypted with each server's key), a re-encryption mix-net (where there is a single key for all servers in the mix-net, but randomized re-encryption in each server) etc. Preferably the tallier mix-net is a simple mix-net but it is robust (that is, if one tallier server is unavailable, it is possible to replace it by another one).

The process whereby the voter encrypts his vote using the encryption key of the tallier mix-net, $TM$, can be represented, as follows:

$$x_i = E_{TM}(v_i)$$

where $x_i$ is the encrypted vote and $E_{TM}$ represents the application of the encryption scheme of the tallier mix-net, $TM$.

The voter, $V_i$, then blinds the encrypted vote, $x_i$, as follows:

$$e_i = FB\ (x_i, r_i)$$

where $FB$ represents the application of the blinding procedure, and $r_i$ is a randomly chosen blinding factor.

The voter, $V_i$, signs the blinded and encrypted vote, $e_i$, as a gauge of its authenticity, using his digital signature scheme, $S_i$. That is, the voter generates

$$s_i = S_i(e_i)$$

The voter, $V_i$, then sends the data ($Id_i$, $C_i$, $e_i$, $s_i$) to the admin server, $AS$.

The admin server, $AS$, checks that the signature, $s_i$, is valid, and that it comes from a voter who is listed in its electoral register (this check being performed by verifying the validity of the certificate $C_i$). The admin server also checks that this voter has not already voted. The latter check involves determining whether or not the admin server, AS, has already generated a digital signature for this voter, $V_i$, in the current election.

If these checks yield a satisfactory result then the admin server, $AS$, signs the blinded and encrypted vote, $e_i$, as a gauge of its authenticity, using its digital signature scheme, $S_{AS}$. That is, the admin server generates:

$$d_i = S_{AS}(e_i)$$

The admin server transmits $d_i$ back to the voter, $V_i$.

The admin server, $AS$, keeps a record of the data ($Id_i$, $C_i$, $e_i$, $s_i$) received from all of the voters for whom it emits digital signatures during the voting process. At the end of the voting phase, the admin server, $AS$, announces the number of voters for whom it has signed votes, and publishes a list $L_{AS} = (Id_i, C_i, e_i, s_i)$ including the data received for all of these voters.

When the voter, $V_i$, receives back $d_i$, that is his blinded ballot signed by the admin server, he retrieves a digitally-signed version ($y_i$) of his ballot ($x_i$) by unblinding $d_i$, as follows:

$$y_i = UFB(d_i)$$

where $UFB$ represents the application of the unblinding procedure.

The voter, $V_i$, then uses the encryption key, $E_M$, of a randomizing entity to encrypt data ($x_i$, $y_i$) corresponding to his encrypted vote and the version of his encrypted vote that is signed by the admin server, $AS$, as follows:

$$c_i = E_M(x_i, y_i)$$

Advantageously, this randomizing entity is a mix-net, $M$, which, once again, preferably is a simple but robust mix-net that can be implemented as a Chaumian mix-net, a randomizing mix-net, etc.

The voter then signs this encrypted data using his signature function, $S_i$, to generate a signed message $\sigma_i$ where:

$$\sigma_i = S_i(c_i)$$

The voter then completes his vote by sending data ($Id_i$, $C_i$, $e_i$, $\sigma_i$) to an electronic ballot box, $BB$. This electronic ballot box is conveniently presented as a bulletin board and implemented as a web server (or the like). The bulletin board verifies the validity of the signature $\sigma_i$ and, if it is valid, records the data ($Id_i$, $C_i$, $e_i$, $\sigma_i$) supplied in this transmission. Preferably, this data is recorded by the web server (or the like) in a form that is resistant to later modification (for example in a read-only-memory).

When the voting process has ended (i.e. after the polls have closed), the bulletin board, $BB$, publishes a list $L_{BB} = (Id_i, C_i, e_i, \sigma_i)$ of all data that has been posted during the voting phase in transmissions with valid voter signatures. This list $L_{BB}$ is compared by the admin server with the list of data $L_{AS}$ it generated in relation to all digital signatures it has provided during the voting phase. If there is an entry ($Id_i$, $C_i$, $e_i$, $s_i$) in $L_{AS}$ for which there is no corresponding entry ($Id_i$, $C_i$, $e_i$, $\sigma_i$) in $L_{BB}$ this means that a voter has obtained a blind digital-signature on his encrypted vote but did not cast the vote. Steps are then taken to process $e_i$ so that the corresponding message-signature pair ($x_i$, $y_i$) can be determined. In particular, the trusted authorities (or judges) are contacted for help in processing $e_i$.

According to the preferred embodiment of the invention, if there are n trusted authorities, it is not necessary for the full set, $J$, of these trusted authorities to cooperate in processing $e_i$. Cooperation of a sub-set of the trusted authorities (i.e. a number $t$, where $t < n$) is sufficient. In this way, the scheme is workable even if one, or a small number of, the trusted authorities $J$ cannot be reached at a given time, or refuses to cooperate. This sub-set of the trusted authorities applies the signature tracing algorithm, $REV_J$, of the fair blind signature scheme that is being used in the voting process, as follows:

$$f_i = REV_J(e_i)$$

it will be recalled that $e_i$ is the blinded version of voter $V_i$'s encrypted vote $x_i$.

Depending upon the particular fair bind signature scheme that is applied, the retrieved data, $f_i$, can be the message-signature pair ($x_i$, $y_i$) itself. In the following description it will be assumed that the retrieved data $f_i$ is the message-signature pair ($x_i$, $y_i$). The retrieved message-signature pair data is recorded in a list, $RL$, which can be termed a "revocation list" which, preferably, is available for public inspection later on. It should be noted that the retrieved data does not reveal the voter's vote, only an encrypted version thereof. Thus, the voter's privacy is respected.

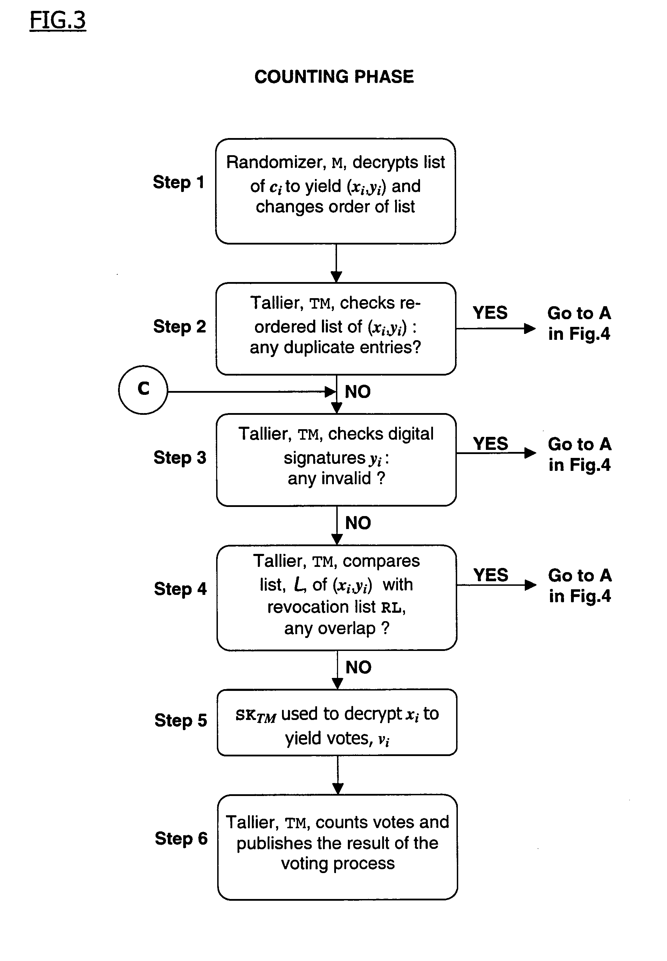

The counting phase of the electronic voting process according to the preferred embodiment of the present invention will now be described with reference to the flow charts of Figs.3 to 5.

As indicated in Step 1 of Fig.3, the list of $c_i$ values recorded by the bulletin board server is supplied to the randomizer module, $M$, which applies its decryption scheme, $D_M$, in order to retrieve signature-message pairs $(x_i, y_i)$. It will be recalled that, in the preferred embodiments of the present invention the randomizer module is implemented as a mix-net. This mix-net outputs a list, $L$, of the values $(x_i, y_i)$ in a random order, different from the order of receipt of the corresponding values, $c_i$. The list, $L$, is then supplied to the tallier module, $TM$, which is also implemented as a mix-net in the preferred embodiment of the invention.

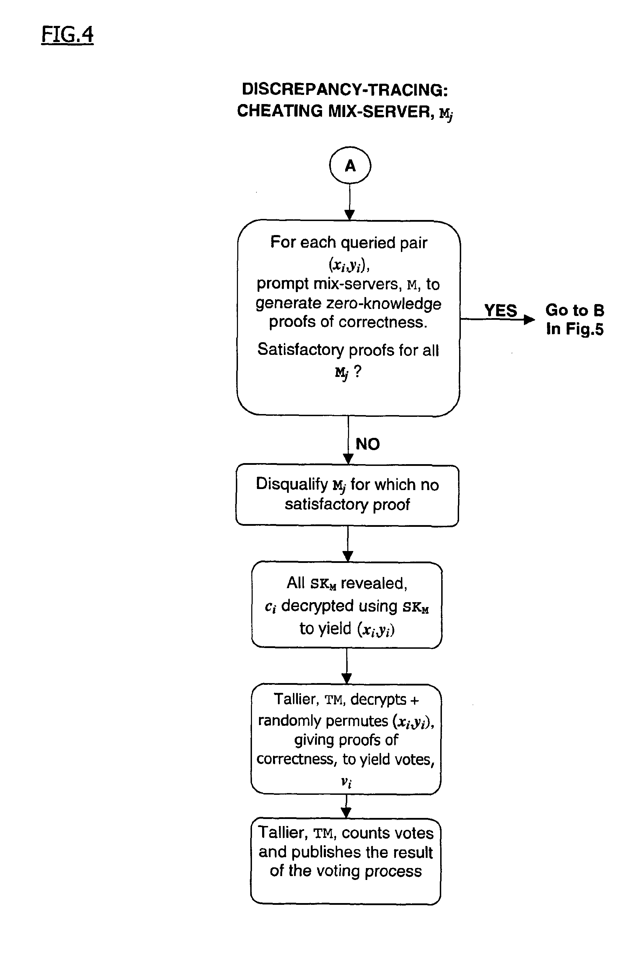

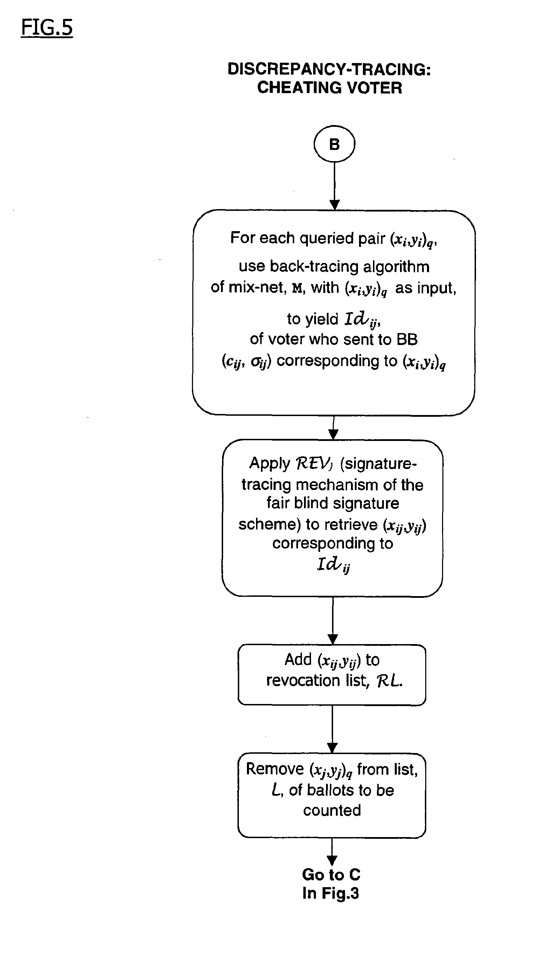

As indicated in Step 2 of Fig.3, the tallier mix-net checks the list L for any duplicate entries. This check can be made by the tallier mix-net itself of by another module which cooperates with the tallier mix-net. If any duplicate entries are found this is a discrepancy which represents an irregularity in the voting procedure. A discrepancy-tracing procedure is then invoked, which will be discussed below in connection with Fig.4. Otherwise, if there are no duplicate entries in the list, $L$, the tallier mix-net proceeds to Step 3 of Fig.3, where it checks the validity of the digital signatures $y_i$ of the entries in list $L$ If any of the digital signatures, $y_i$, are invalid then, once again, the discrepancy-tracing procedure of fig.4 is invoked.

In the case where the tallier determines that all of the digital signatures, $y_i$, are valid, it next performs a comparison of the entries $(x_i, y_i)$ in $L$ with the entries $(x_i, y_i)$ in the revocation list, $RL$ (see Step 4 of Fig.3). If there is overlap between the two sets of entries, in other words if $L \cap RL$ is not the empty set, then the discrepancy-tracing procedure of Fig.4 is invoked. Otherwise, the servers, $TM_j$, of the tallier mix-net reveal their private keys so that the signals, $x_i$, can be decrypted (using $SK_{TM}$). Accordingly, the votes, $v_i$, are revealed, the tallier module tallies them up then publishes the result of the election (see Step 6 of Fig.3). The counting stage then ends.

As indicated above, in the case where the checks performed by the tallier module in steps 2, 3 or 4 reveal a discrepancy, the origin of the discrepancy is sought using the discrepancy-tracing of Fig.4.

According to the discrepancy-tracing procedure of Fig.4, it is first checked whether the discrepancy arises with the servers of the randomizer mix-net, $M$. This check is performed by prompting each of the mix-servers, $M_j$, to generate a zero-knowledge proof of correctness to demonstrate the correspondence between their output and input, using the queried data pair $(x_i, y_i)_q$ as input and applying the mix-net's back-tracing algorithm. Incidentally, if the discrepancy-tracing procedure is being invoked because the tallier found one or more duplicate entries in the list, L, then the queried data pairs $(x_i, y_i)_q$ will be the duplicated entries. If the discrepancy-tracing procedure is being invoked because the tallier found one or more invalid digital signatures, $y_i$, then the queried data pairs $(x_i, y_i)_q$ will be the data pairs containing these invalid digital signatures. If the discrepancy-tracing procedure is being invoked because the tallier found overlap between $L$ and $RL$, then the queried data pairs $(x_i, y_i)_q$ will be the data pairs affected by the overlap.

If all of the mix-net servers can generate satisfactory proofs of knowledge then the discrepancy arises, not with a mix-net server, $M_j$, but with the voter. Accordingly a different part of the discrepancy-tracing protocol (which presumes a cheating voter) is invoked, as will be discussed below with reference to Fig.5.

If one of the mix-net servers cannot generate a satisfactory proof of knowledge, the discrepancy-tracing procedure of Fig.4 continues, based on the presumption that the mix server which could not produce a satisfactory proof of knowledge is a cheating mix-server. This mix server is disqualified. The other mix servers in this mix-net, $M$, must now reveal their private keys, yielding $SK_M$. The $c_i$ data recorded by the bulletin board server is now decrypted using $SK_M$ and a new version of the list, $L$, is generated containing all of the decrypted data-pairs $(x_i, y_i)$. This list, $L$, is sent to the tallier, $TM$.

In this case the tallier mix-net, $TM$, permutes the order of the entries $(x_i, y_i)$ as well as decrypting the vote data. Moreover, in this case the servers, $TM_j$, of the tallier mix-net are prompted to generate respective proofs that they correctly mix and decrypt their inputs. This increases the duration of the vote counting phase, and increases costs. However, it is to be noted that the generation of these proofs is not required in the case of an election without irregularities. Once the vote data has been decrypted, it is counted and the tallier publishes the result of the election. This ends the counting phase.

Incidentally, if the randomizing module 40 served only to decrypt the signature-message pairs, and not to randomize their order, there would be a potential problem in the case where the servers of module 40 were obliged to reveal their keys (because of detection of an irregularity arising from operation of module 40). In such a case, when the keys were revealed there would be a direct correspondence between the first entry in the list, $L$, input to the module 40 and the first entry in the list of signature-message pairs output by the module 40. In view of the fact that the list input to the module 40 includes codes identifying the respective voters, this would prejudice the anonymity of the voting process.

On the other hand, if the discrepancy-tracing procedure of Fig.5 has been invoked (in a case where it is presumed that the discrepancy arises from voter action, not action of servers in the randomizing mix-net), the normal operation of the tallier mix-net, $TM$, can be preserved, providing that the irregular vote data has been eliminated from the data to be processed.

More particularly, as indicated in Fig.5, in the case of an irregularity attributable to a voter, the identity of the misbehaving voter can be revealed by implementing the back-tracing algorithm of the randomizing mixnet, M, using the queried data pair $(x_i, y_i)_q$. This will yield the identifier, $Id_{ij}$, of the voter who sent the data $c_{ij}, \sigma_{ij}$ to the bulletin board server, *BB.*

Once the misbehaving voter's identifier has been revealed, the signature-tracing mechanism of the fair blind signature scheme is applied so as to identify the data-pair $(x_{ij}, y_{ij})$ corresponding to $Id_y$ This data pair $(x_{ij}, y_{ij})$ is added to the revocation list, *RL*, but removed from the list, *L,* of votes to be counted. The procedure can then return to Step 3 of Fig.3.

It will be seen that, when there are no voting irregularities, the various mix servers do not need to generate proofs of the correctness of their operation. This leads to an extremely fast counting of the votes. Moreover, because misbehaving mix servers will always be detected in this system, it is unlikely that they will misbehave. Accordingly, the electronic voting scheme of the present invention is liable to yield the result of an election very rapidly.

Considering the security of the electronic voting scheme of the present invention, the following remarks can be made.

Provided that the digital signature scheme that is selected for use in the electronic voting scheme of the present invention is not capable of being broken, then the principles of eligibility and unreusability are respected in this scheme.

If at least one mix server is honest, and **n-t+1** of the trusted authorities are honest, then the anonymity of the voters is protected.

Advantageously, the preferred embodiments of the invention will be implemented using a digital signature scheme in which the signatures are one-more unforgeable as long as $n$-$t$+1 admin servers are honest. In such a case, a valid data pair $(x_i, y_i)$ cannot be created. Thus the principle of accuracy is respected.

The talliers cannot decrypt the ballots during the progress of the counting phase because the tallier module is implemented as a mix-net. Therefore the principle of fairness is respected.

The voters do not need to take any special action to enable their votes to be opened, or to verify that their votes have been counted. Accordingly, the principle of "vote and go" is respected.

In the preferred embodiments of the invention, the lists $L_{AS}$, $L_{BB}$, $L$ and $RL$ are made public at the end of execution of the overall protocol. Moreover, every step of the counting stage (including the back-tracing procedures) can be published. This enables any interested party to check that the only ballots which have been discarded are those which truly were invalid, and to verify that the outcome of the election is consistent with the valid cast ballots. Thus, the principle of public verifiability is respected.

In the above-described process, it is preferred that the fair blind signature scheme should be a threshold fair blind signature scheme. Such schemes are well-known and so will not be described in detail here.

Although the present invention has been described in terms of a particular preferred embodiment thereof, the person skilled in the art will readily understand that various features of the preferred embodiment may be varied, adapted and/or replaced by others without departing from the present invention as defined in the accompanying claims.

For example, although the preferred embodiment has been described in terms of on-line voting, typically by users in their homes, it is to be understood that the physical location of the voters is unimportant - in some circumstances it is possible to envisage use of the present invention at a traditional polling station (which could, for example, be unstaffed).

Similarly, the present invention is not particularly limited with regard to the mechanism used for communicating the various signals between the participants in the system. Typically telecommunications networks and the internet will be used for communications between the users, the mix servers of the first mix net and the admin server. However, other networks can be used. In some circumstances it may be feasible for certain of the signals exchanged between the participants in the system to be recorded on a recording medium and physically transported between those participants.

It will be understood that the on-line voting techniques of the present invention can be applied in any kind of vote, whether it be an election, a referendum, an opinion poll, etc.

**Claims**

1. An electronic voting method comprising the step of using a fair blind signature scheme to obtain a digital signature $(y_i)$ of a data signal $(x_i)$ comprising a voter's vote $(v_i)$.

2. The electronic voting method of claim 1, wherein the fair blind signature scheme is a threshold fair blind signature scheme in which the digital signature is obtained from a sub-set of a group of servers, the group of servers containing n servers and the subset containing $t$ servers, where $t < n$.

3. The electronic voting method of claim 2, wherein each digital signature obtained from said set of servers is one-more unforgeable as long as $n - t + 1$ of the servers in said group are honest.

4. The electronic voting method of claim 1, 2 or 3, wherein the data signal $(x_i)$ corresponds to the voter's vote ($v_i$) encrypted according to a first encryption scheme ($E_{TM}$), and the method further comprises the step of applying the decryption scheme ($D_{TM}$) inverse to said first encryption scheme to said data signal ($x_i$) whereby to retrieve the voter's vote ($v_i$).

5. The electronic voting method of claim 4, wherein said first encryption scheme is the encryption scheme of a first mix-net (*TM*).

6. The electronic voting method of claim 4 or 5, and comprising the steps of:

   receiving, in a first order, a batch of encrypted data signals, each encrypted data signal ($c_i$) comprising data encrypted according to a second encryption scheme ($E_M$) said data including a respective data signal ($x_i$);

   retrieving each data signal ($x_i$) from the respective encrypted data signal ($c_i$) in said batch by applying a decryption scheme ($D_M$).inverse to said second encryption scheme ($E_M$); and

   outputting the retrieved data signals ($x_i$) for said batch in a different order from said first order.

7. The electronic voting method of claim 6, wherein said second encryption scheme is the encryption scheme of a second mix-net (*M*).

8. The electronic voting method of claim 7, and comprising the step of detecting irregularities in the voting process, wherein the mix-net servers of said second mix-net do not need to generate proofs of correctness unless this irregularity-detecting step detects the occurrence of an irregularity.

9. The electronic voting method of claim 8, wherein the step of detecting irregularities comprises verifying that the ballots to be counted do not contain duplicated data-pairs, wherein a data-pair corresponds to one of said data signals and the digital signature thereof.

10. The electronic voting method of claim 8, wherein the step of detecting irregularities comprises checking the validity of the digital signatures in the ballots to be counted.

11. The electronic voting method of claim 8, wherein the step of detecting irregularities comprises checking that there is no overlap between the ballots to be counted and entries in a revocation list

12. The electronic voting method of any one of claims 8 to 11, and comprising the step of determining whether or not the irregularity is attributable to a server of the second mix-net.

13. An electronic voting method according to any previous claim and comprising the steps of:

   receiving said data signal ($x_i$) for digital signature according to said fair blind signature scheme at a server module (AS), said data signal ($x_i$) comprising a vote ($v_i$) selected by a voter ($V_i$), said vote ($v_i$) being encrypted according to said first encryption scheme ($E_{TM}$), blinded according to said fair blind signature scheme and digitally signed according to a digital signature scheme of said voter;

   verifying, by said server module (AS), that the digital signature ($s_i$) in the received signal is valid;

   in the case where the verifying step confirms that the digital signature in the signal received by said server module (AS) is valid, said server module (AS) digitally signs the blinded encrypted vote ($e_i$) and outputs the digitally-signed message ($S_{AS}(e_i)$);

   unblinding the digitally-signed message ($S_{AS}(e_i)$) to yield said digital signature ($y_i$) of the data signal ($x_i$);

   encrypting said data signal ($x_i$) and said digital signature ($y_i$) thereof according to said second encryption scheme ($E_M$) to produce encrypted data signal ($c_i$); and

   signing said encrypted data signal according to a signature scheme of the voter ($V_i$).

## FIG.1

Database, $L_{AS}$

10

Voter

Voter

Voter

Admin
Server(s)
20

Bulletin
Board
Server
30

Database, $L_{BB}$

Trusted
authority

Trusted
authority

Trusted
authority

Randomizer
40

Tallier

50

60

# FIG.2

| VOTER | ADMIN SERVER(S) 20 | BULLETIN BOARD SERVER 30 |

**voter selects vote, $v_i$**
**encrypts vote:** $x_i = E_{TM}(v_i)$;
**blinds $x_i$ to give $e_i$**
**signs $e_i$ to give $s_i$**
**transmits** $(Id_i, C_i, e_i, s_i)$

$(Id_i, C_i, e_i, s_i)$

AS verifies $s_i$ is valid;
checks voter has right to vote;
checks voter has not already voted;
signs $e_i$ to give
$d_i = S_{AS}(e_i)$;
transmits $d_i$ to $V_i$

$L_{AS}$

$d_i$

voter unblinds $d_i$ to yield $y_i$;
encrypts $(x_i, y_i)$ to give
$c_i = E_M(x_i, y_i)$;
signs $c_i$ to give $\sigma_i$
transmits $(Id_i, C_i, c_i, \sigma_i)$ to BB

$(Id_i, C_i, c_i, \sigma_i)$

electronic ballot boxBB
verifies validity of signature $\sigma_i$ and, if valid, records $(Id_i, C_i, c_i, \sigma_i)$.
Publishes $L_{BB}$ containing all listed $(Id_i, C_i, c_i, \sigma_i)$ with valid signatures

$L_{BB}$

Discrepancies between $L_{AS}$ and $L_{BB}$ ?

YES

Use $REV_j$ to enable the affected pairs $(x_i, y_i)$ to be identified

The affected pairs are put on $RL$

EP 1 571 777 A1

# FIG.3

## COUNTING PHASE

**Step 1** — Randomizer, M, decrypts list of $c_i$ to yield $(x_i, y_i)$ and changes order of list

↓

**Step 2** — Tallier, TM, checks re-ordered list of $(x_i, y_i)$ : any duplicate entries? — **YES** → **Go to A in Fig.4**

C → **NO**

**Step 3** — Tallier, TM, checks digital signatures $y_i$ : any invalid ? — **YES** → **Go to A in Fig.4**

**NO**

**Step 4** — Tallier, TM, compares list, $L$, of $(x_i, y_i)$ with revocation list RL, any overlap ? — **YES** → **Go to A in Fig.4**

**NO**

**Step 5** — $SK_{TM}$ used to decrypt $x_i$ to yield votes, $v_i$

↓

**Step 6** — Tallier, TM, counts votes and publishes the result of the voting process

## FIG.4

**DISCREPANCY-TRACING:
CHEATING MIX-SERVER, $M_j$**

( A )

For each queried pair
$(x_i, y_i)$,
prompt mix-servers, $M$, to
generate zero-knowledge
proofs of correctness.

Satisfactory proofs for all
$M_j$ ?

**YES** → **Go to B
In Fig.5**

**NO**

Disqualify $M_j$ for which no
satisfactory proof

All $SK_M$ revealed,
$c_i$ decrypted using $SK_M$
to yield $(x_i, y_i)$

Tallier, $TM$, decrypts +
randomly permutes $(x_i, y_i)$,
giving proofs of
correctness, to yield votes,
$v_i$

Tallier, $TM$, counts votes
and publishes the result
of the voting process

## FIG.5

**DISCREPANCY-TRACING:**
**CHEATING VOTER**

( B )

For each queried pair $(x_i, y_i)_q$,

use back-tracing algorithm
of mix-net, $\text{M}$, with $(x_i, y_i)_q$ as input,

to yield $Id_{ij}$,
of voter who sent to BB
$(c_{ij}, \sigma_{ij})$ corresponding to $(x_i, y_i)_q$

Apply $REV_j$ (signature-
tracing mechanism of the
fair blind signature
scheme) to retrieve $(x_{ij}, y_{ij})$
corresponding to
$Id_{ij}$

Add $(x_{ij}, y_{ij})$ to
revocation list, $RL$.

Remove $(x_j, y_j)_q$ from list,
$L$, of ballots to be
counted

**Go to C**
**In Fig.3**

**European Patent Office**

## EUROPEAN SEARCH REPORT

Application Number

EP 04 29 0557

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WEN-SHENQ JUANG, CHIN-LAUNG LEI, PEI-LING YU: "A Verifiable Multi-Authorities Secret Election Allowing Abstaining from Voting" INTERNATIONAL COMPUTER SYMPOSIUM, [Online] December 1998 (1998-12), pages 1-21, XP002284452 TAINAN, TAIWAN Retrieved from the Internet: URL:http://citeseer.ist.psu.edu/cs> [retrieved on 2004-06-11] * page 1 - page 10 * * page 16 * * page 19 - page 20 * ----- | 1-13 | H04L9/32 |
| A | JUANG W S ; LEI C L ; LIAW H T: "Fair blind threshold signatures based on discrete logarithm" COMPUT. SYST. SCI. ENG. (UK), COMPUTER SYSTEMS SCIENCE AND ENGINEERING, CRL PUBLISHING, vol. 16, November 2001 (2001-11), pages 1-21, XP002284453 ISSN: 0267-6192 * page 1 - page 12 * ----- | 1-13 | TECHNICAL FIELDS SEARCHED (Int.Cl.7) H04L |

The present search report has been drawn up for all claims

| Place of search | Date of completion of the search | Examiner |
|---|---|---|
| Berlin | 15 June 2004 | Carnerero Álvaro, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)